# EUROPEAN PATENT APPLICATION

(11) **EP 4 538 858 A1**
(43) Date of publication of application: **16.04.2025**
(21) Application number: 24206141.4
(22) Date of filing: 11.10.2024
(51) Int. Cl.: G06F 7/483, G06F 7/499, G06F 30/33, G06F 7/487, G06F 7/544, G06F 117/02, G06F 119/02

(54) **ARITHMETIC CIRCUIT DESIGN AND EVALUATION USING BACKWARD ERROR ANALYSIS**

(30) Priority: 13.10.2023 US 202318379962
(71) Applicant: Google LLC, Mountain View, CA 94043 (US)
(72) Inventor: CLARK, Christopher Aaron, Mountain View, 94043 (US); AGARWAL, Sameer, Mountain View, 94043 (US); CITRO, Craig, Mountain View, 94043 (US); LARSEN, Rasmus Munk, Mountain View, 94043 (US)
(74) Representative: Betten & Resch

(57) **Abstract**

Designing a circuit to perform a floating point arithmetic operation by identifying a multiple of parameters that characterize circuits for performing the floating point arithmetic operation and an equation relating the plurality of parameters to a maximum relative backward error parameter, the circuits respectively corresponding to combinations of values for the parameters; specifying a target maximum relative backward error for the floating point arithmetic operation; computing a maximum relative backward error for each of one or more of the combinations of values based on the equation; and when the maximum relative backward error for a respective combination of values is less than the target maximum relative backward error, identifying the circuit corresponding to the maximum relative backward error as a circuit operable to perform the floating point arithmetic operation at a desirable output accuracy.

## Description

### BACKGROUND

Floating-point calculations implemented in hardware are subject to errors introduced by approximations made by the circuit designer as well as rounding errors that are introduced by the use of finite precision arithmetic. A commonly used method for measuring the error in these calculation implementations is the relative forward error. Relative forward error is a function of the difference between the true output and the approximation generated by an implementation (e.g., a circuit). For some types of calculations, the relative forward error cannot be bounded. For example, for a floating-point addition calculation the maximum relative forward error can be infinite. Thus, maximum relative forward error is not practicable as an indicator of performance for floating-point calculation circuits.

### BRIEF SUMMARY

It has been recognized that relative backward error can be used as an indicator of performance for floating-point calculation circuits. It has been further recognized that the maximum relative backward error, or an estimate of the maximum relative backward error, for some types of floating-point calculation circuits that perform floating-point arithmetic can be computed based on parameters that characterize the circuits. In this manner, a target maximum relative backward error may be used as a design criterion such that when the maximum relative backward error, or the estimated maximum relative backward error, for a given set of parameter values is at or below the target, a circuit corresponding to the set of parameter values is said to be a circuit operable to perform the floating point arithmetic operation at a desirable output accuracy. For simplicity of description, the maximum relative backward error and the estimated maximum relative backward error will hereinafter be collectively referred to as the maximum relative backward error.

In one aspect, the presently disclosed technology provides a method for designing a circuit to perform a floating point arithmetic operation on one or more floating point operands including identifying a plurality of parameters that characterize circuits for performing the floating point arithmetic operation and an equation relating the plurality of parameters to a maximum relative backward error parameter, the circuits respectively corresponding to combinations of values for the parameters; specifying a target maximum relative backward error for the floating point arithmetic operation; computing a maximum relative backward error for each of one or more of the combinations of values based on the equation; and when the maximum relative backward error for a respective combination of values is less than the target maximum relative backward error, identifying the circuit corresponding to the maximum relative backward error as a circuit operable to perform the floating point arithmetic operation at a desirable output accuracy.

In another aspect, the present disclosure provides a system for designing a circuit to perform a floating point arithmetic operation on one or more floating point operands including an interface for receiving information identifying a plurality of parameters that characterize circuits for performing the floating point arithmetic operation and an equation relating the plurality of parameters to a maximum relative backward error parameter, the circuits respectively corresponding to combinations of values for the parameters, and for receiving a target maximum relative backward error for the floating point arithmetic operation; and one or more processors operable to compute a maximum relative backward error for each of one or more of the combinations of values based on the equation, wherein when the maximum relative backward error for a respective combination of values is less than the target maximum relative backward error, the circuit corresponding to the maximum relative backward error is identified as a circuit for performing the floating point arithmetic operation at a desirable output accuracy.

### BRIEF DESCRIPTION OF THE DRAWINGS

The accompanying drawings are not intended to be drawn to scale. Also, for purposes of clarity not every component may be labeled in every drawing. In the drawings:
Fig. 1 is a high-level system diagram of an exemplary processing system for performing the functions and methods described herein.
Fig. 2 is a flow chart depicting an illustrative process for designing a circuit to perform a floating point arithmetic operation according to embodiments.

### DETAILED DESCRIPTION

Examples of systems and methods are described herein. It should be understood that the words "example," "exemplary" and "illustrative" are used herein to mean "serving as an example, instance, or illustration." Any embodiment or feature described herein as being an "example," "exemplary" or "illustration" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made, without departing from the spirit or scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

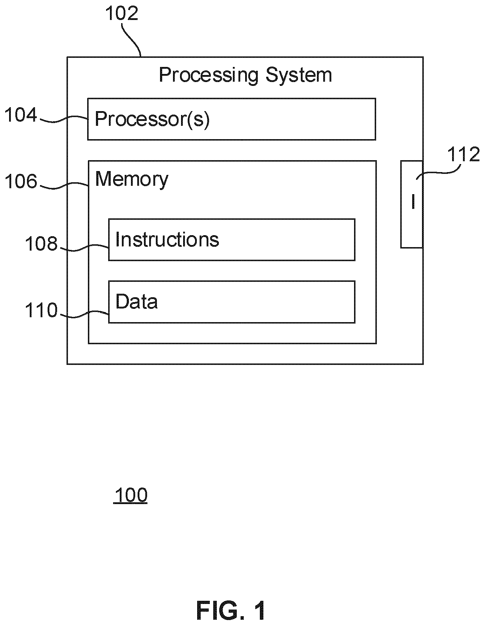

FIG. 1 shows a high-level system diagram 100 of an exemplary processing system 102 for performing the functions and methods of the presently disclosed technology. The processing system 102 may include one or more processors 104, a memory 106 for storing instructions 108 and data 110, and an interface 112 for receiving data and/or instructions. The instructions 108 and/or data 110 may cause the system 102 to implement any of the herein described methods for designing a circuit to perform a floating point arithmetic operation, or to operate as any of the herein described systems for designing a circuit to perform a floating point arithmetic operation. For example, the processing system 102 may, through the interface 112, receive information identifying a plurality of parameters that characterize circuits for performing a floating point arithmetic operation, an equation relating the plurality of parameters to a maximum relative backward error parameter, and a target maximum relative backward error for the floating point arithmetic operation; and, through the one or more processors 104, the system 102 may use the equation to compute a maximum relative backward error for each of one or more combinations of parameter values (each combination of parameter values corresponding to a circuit for performing the floating point arithmetic operation) so that the computed maximum relative backward errors may be compared to the target maximum relative backward error. Processing system 102 may be resident on a single computing device. For example, processing system 102 may be a server, personal computer, or mobile device, and may thus be local to that single computing device. Similarly, processing system 102 may be resident on a cloud computing system or other distributed system. In such a distributed system case, a system for designing a circuit to perform a floating point arithmetic operation may be distributed across two or more different physical computing devices.

In some embodiments, the presently disclosed technology concerns designing a circuit to perform a floating point arithmetic operation by identifying a multiple of parameters that characterize circuits for performing the floating point arithmetic operation and an equation relating the plurality of parameters to a maximum relative backward error parameter, the circuits respectively corresponding to combinations of values for the parameters; specifying a target maximum relative backward error for the floating point arithmetic operation; computing a maximum relative backward error for each of one or more of the combinations of values based on the equation; and when the maximum relative backward error for a respective combination of values is less than the target maximum relative backward error, identifying the circuit corresponding to the maximum relative backward error as a circuit operable to perform the floating point arithmetic operation at a desirable output accuracy.

In some embodiments, the presently disclosed technology concerns designing circuits to perform a floating point arithmetic operation that involves floating point addition. For instance, the technology may be employed to design circuits that perform an n-way addition, where n is an integer greater than or equal to 2, or circuits that perform a dot product computation which involves an n-way addition. Of particular interest are adders that use a limited precision accumulator." For adder circuits with a limited precision accumulator that perform n-way addition, the present technology provides that the following parameters are parameters which deterministically characterize circuits for performing the floating point arithmetic operation: a precision of the floating point operands, a number of addends, a number of guard bits used for accumulation, a rounding mode, and a precision of the floating point output. Further, the present technology provides a formula for relating the parameters to a maximum relative backward error parameter. The formula has been arrived at heuristically, through a combination of rigorous proof and conjecture. That is, a formula is provided that equates parameter values associated with an adder circuit having a limited precision accumulator and operable to perform floating point addition to a maximum relative backward error for the circuit. By way of example, parameter values that may be entered into the formula are 24 for a number of bits of precision of the floating point operands, 256 for a number of addends, 5 for a number of guard bits used for accumulation, one of round-to-nearest-even or round-to-zero as a rounding mode, and 24 for a number of bits of precision of the floating point output.

The maximum relative backward error computed by the formula is used as an indicator of circuit performance. If the maximum relative backward error for a circuit (i.e., a circuit as defined by a set of parameter values), computed by the formula, is less than a target maximum relative backward error then the circuit is said to be a circuit operable to perform the floating point arithmetic operation at a desirable output accuracy.

Regarding the target maximum relative backward error, in some embodiments the target maximum relative backward error is set to less than or equal to half the smallest representation error of the floating point operands for the floating point arithmetic operation. In such embodiments, if the computed maximum relative backward error for a circuit is less than or equal to half the smallest representation error of the floating point operands, the circuit is said to be a circuit operable to perform the floating point arithmetic operation at a desirable output accuracy. Thus, for example, in the case of Institute of Electrical and Electronics Engineers (IEEE) 754 single-precision floating point operands the target maximum relative backward error may be set to less than or equal to 2^{-24} as the precision p=24 bits; and if the maximum relative backward error for a circuit is less than 2^{-24} the circuit is said to be a circuit operable to perform the floating point arithmetic operation at a desirable output accuracy.

The setting of the target maximum relative backward error to less than or equal to half the smallest representation error of the floating point operands is based upon consideration of relative backward error in the context of floating point calculation. More specifically, when one wants to implement a circuit to compute a function f(x), where x is a floating point input and f(x) denotes the function's exact value, the circuit implements the function in finite precision. That is, the answer will almost always be inexact, and the circuit is said to be computing an approximation, a(x), of f(x). There is more than one way to interpret the difference between f(x) and a(x). One way is to make note of the relative forward error, which is |f(x) - a(x)|/|f(x)|. Another way to interpret the difference between f(x) and a(x) error is to make note of the nearest value of x, referred to as x', such that f(x') = a(x), with the difference |x - x'|/|x| being called the relative backward error. The relative backward error allows one to interpret the circuit error in terms of changes to the input. Accordingly, when x is a floating point number of precision p, the real number approximated by x can be up to 2^{-p} away from x while still being rounded to x (when using round to nearest, which is the most accurate rounding mode). So, when x' is within 2^{-p} of x one cannot say that x' was different from the real number that was rounded to get x. In that sense, a relative backward error of 2^{-p} is effective as the target maximum relative backward error. Moreover, while a maximum relative backward error cannot be computed for every f(x) and a(x), for some such cases an estimated maximum relative backward error can be computed and serve as a basis for comparison to a target maximum relative backward error.

In any event, when a multiple of circuits satisfy a given target maximum relative backward error, it may be desirable to choose from among the multiple of circuits a circuit that has the most desirable characteristics as the circuit to use for performing the floating point operation. For example, from among a multiple of circuits that satisfy a given target maximum relative backward error, one may wish to choose the circuit having the smallest size and/or the lowest power consumption per floating point operation. In some embodiments, one may choose a circuit from among a multiple of circuits that satisfy a given target maximum relative backward error by considering parameter values. For instance, from among the multiple of circuits, the circuit having the fewest number of guard bits may be selected, as the number of guard bits is a good proxy for the circuit's power consumption per floating point operation. Further, the number of guard bits and/or the rounding mode may serve as the basis for selection of a circuit, either apart from the number of addends, or as a way to select between circuits having the same number of addends.

In other embodiments, one may choose a circuit from among a multiple of circuits that satisfy a given target maximum relative backward error by synthesizing each circuit of the multiple of circuits and selecting the synthesized circuit that has the most desirable characteristics. More specifically, one may choose a circuit by synthesizing the circuits for each of more than one of the combinations of parameter values that yields less than the target maximum relative backward error to generate a plurality of synthesized circuits, and selecting the synthesized circuit that has the smallest size and/or the lowest power consumption per floating point operation. In still other embodiments, one may choose a circuit by first considering parameter values to select a subset of the multiple of circuits that satisfy a given target maximum relative backward error (e.g., a subset in which each circuit of the subset has a relatively small number of addends), and then synthesize each circuit in the subset and select the synthesized circuit that has the most desirable characteristics.

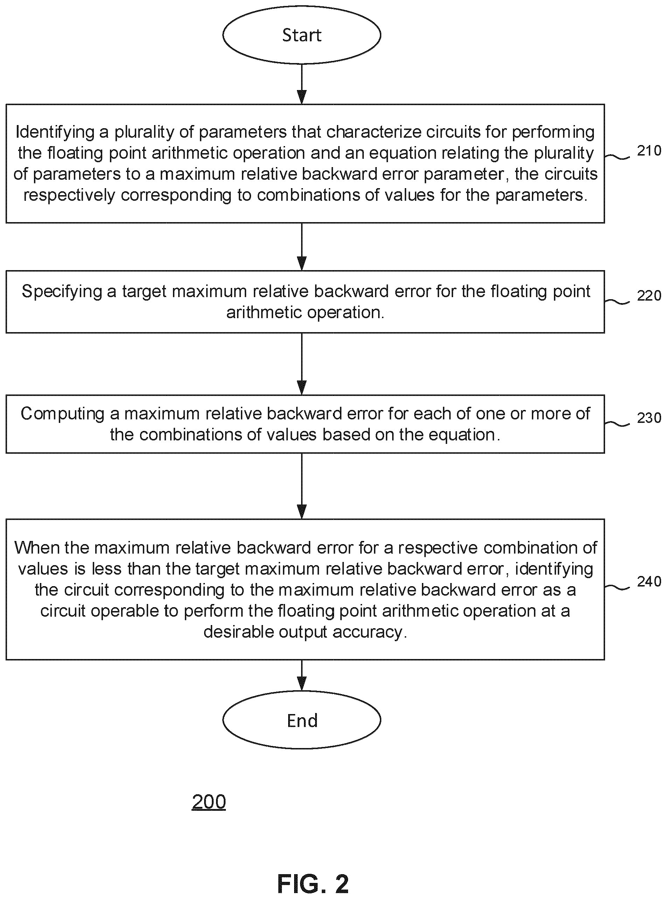

Referring now to Fig. 2, there is shown a flow chart depicting an illustrative process 200 for designing a circuit to perform a floating point arithmetic operation. As can be seen from Fig. 2, a first step may be identifying a plurality of parameters that characterize circuits for performing the floating point arithmetic operation and an equation relating the plurality of parameters to a maximum relative backward error parameter, the circuits respectively corresponding to combinations of values for the parameters (step 210). A next step may be specifying a target maximum relative backward error for the floating point arithmetic operation (step 220), although the order of the steps in Fig. 2 is merely illustrative, and the specifying step may be performed before the identifying step, concurrently with the identifying step, or after the identifying step. In any case, after identifying the parameters and specifying the target maximum relative backward error, the next step is computing a maximum relative backward error for each of one or more of the combinations of values based on the equation (step 230). Then, when the maximum relative backward error for a respective combination of values is less than the target maximum relative backward error, the process includes identifying the circuit corresponding to the maximum relative backward error as a circuit operable to perform the floating point arithmetic operation at a desirable output accuracy (step 240).

Embodiments of the present technology include, but are not restricted to, the following.
(1) A method for designing a circuit to perform a floating point arithmetic operation on one or more floating point operands including identifying a plurality of parameters that characterize circuits for performing the floating point arithmetic operation and an equation relating the plurality of parameters to a maximum relative backward error parameter, the circuits respectively corresponding to combinations of values for the parameters; specifying a target maximum relative backward error for the floating point arithmetic operation; computing a maximum relative backward error for each of one or more of the combinations of values based on the equation; and when the maximum relative backward error for a respective combination of values is less than the target maximum relative backward error, identifying the circuit corresponding to the maximum relative backward error as a circuit operable to perform the floating point arithmetic operation at a desirable output accuracy.
(2) The method according to (1), wherein the target maximum relative backward error is less than or equal to half of a smallest representation error of the floating point operands.
(3) The method according to (1), wherein when the maximum relative backward error for more than one of the combinations of values is less than the target maximum relative backward error, one of the circuits corresponding to the more than one of the combinations of values is selected as a circuit to perform the floating point arithmetic operation.
(4) The method according to (3), wherein the selected circuit to perform the floating point arithmetic operation is the circuit having the combination of values realizing the most desirable circuit among the circuits corresponding to the more than one of the combinations of values.
(5) The method according to (4), wherein the selected circuit is selected by synthesizing the circuits for each of the more than one of the combinations of values that is less than the target maximum relative backward error to generate a plurality of synthesized circuits, and selecting the synthesized circuit that has at least one of the smallest size or the lowest power consumption per floating point operation.
(6) The method according to (1), wherein the floating point arithmetic operation includes an n-way addition operation to generate a floating point output, where n is an integer greater than or equal to two.
(7) The method according to (6), wherein the floating point arithmetic operation includes a dot product computation.
(8) The method according to (6), wherein the parameters include a precision of the floating point operands, a number of addends, a number of guard bits used for accumulation, a rounding mode, and a precision of the floating point output.
(9) The method according to (8), wherein the rounding mode is one of round to zero or round to nearest even.
(10) The method according to (1), further including synthesizing the circuit operable to perform the floating point arithmetic operation at a desirable output accuracy.
(11) A system for designing a circuit to perform a floating point arithmetic operation on one or more floating point operands including an interface for receiving information identifying a plurality of parameters that characterize circuits for performing the floating point arithmetic operation and an equation relating the plurality of parameters to a maximum relative backward error parameter, the circuits respectively corresponding to combinations of values for the parameters, and for receiving a target maximum relative backward error for the floating point arithmetic operation; and one or more processors operable to compute a maximum relative backward error for each of one or more of the combinations of values based on the equation, wherein when the maximum relative backward error for a respective combination of values is less than the target maximum relative backward error, the circuit corresponding to the maximum relative backward error is identified as a circuit for performing the floating point arithmetic operation at a desirable output accuracy.
(12) The system according to (11), wherein the one or more processors are further operable to synthesize the circuit for performing the floating point arithmetic operation.
(13) The system according to (11), wherein the target maximum relative backward error is less than or equal to half of a smallest representation error of the floating point operands.
(14) The system according to (11), wherein when the maximum relative backward error for more than one of the combinations of values is less than the target maximum relative backward error, one of the circuits corresponding to the more than one of the combinations of values is selected as a circuit to perform the floating point arithmetic operation.
(15) The system according to (14), wherein the selected circuit to perform the floating point arithmetic operation is the circuit having the combination of values realizing the most desirable circuit among the circuits corresponding to the more than one of the combinations of values.
(16) The method according to (15), wherein the selected circuit is selected by synthesizing the circuits for each of the more than one of the combinations of values that is less than the target maximum relative backward error to generate a plurality of synthesized circuits, and selecting the synthesized circuit that has at least one of the smallest size or the lowest power consumption per floating point operation.
(17) The system according to (11), wherein the floating point arithmetic operation includes an n-way addition operation to generate a floating point output, where n is an integer greater than or equal to two.
(18) The system according to (17), wherein the floating point arithmetic operation includes a dot product computation.
(19) The system according to (17), wherein the parameters include a precision of the floating point operands, a number of addends, a number of guard bits used for accumulation, a rounding mode, and a precision of the floating point output.
(20) The system according to (19), wherein the rounding mode is one of round to zero or round to nearest even.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims.

## Claims

1. A method for designing a circuit to perform a floating point arithmetic operation on one or more floating point operands comprising:
identifying a plurality of parameters that characterize circuits for performing the floating point arithmetic operation and an equation relating the plurality of parameters to a maximum relative backward error parameter, the circuits respectively corresponding to combinations of values for the parameters;
specifying a target maximum relative backward error for the floating point arithmetic operation;
computing a maximum relative backward error for each of one or more of the combinations of values based on the equation; and
when the maximum relative backward error for a respective combination of values is less than the target maximum relative backward error, identifying the circuit corresponding to the maximum relative backward error as a circuit operable to perform the floating point arithmetic operation at a desirable output accuracy.

2. The method according to claim 1, wherein the target maximum relative backward error is less than or equal to half of a smallest representation error of the floating point operands.

3. The method according to claim 1, wherein when the maximum relative backward error for more than one of the combinations of values is less than the target maximum relative backward error, one of the circuits corresponding to the more than one of the combinations of values is selected as a circuit to perform the floating point arithmetic operation.

4. The method according to claim 3,
wherein the selected circuit to perform the floating point arithmetic operation is the circuit having the combination of values realizing the most desirable circuit among the circuits corresponding to the more than one of the combinations of values;
wherein, optionally, the selected circuit is selected by synthesizing the circuits for each of the more than one of the combinations of values that is less than the target maximum relative backward error to generate a plurality of synthesized circuits, and selecting the synthesized circuit that has at least one of the smallest size or the lowest power consumption per floating point operation.

5. The method according to one of claims 1 to 4,
wherein the floating point arithmetic operation comprises an n-way addition operation to generate a floating point output, where n is an integer greater than or equal to two, .
wherein, optionally, the floating point arithmetic operation comprises a dot product computation.

6. The method according to claim 5,
wherein the parameters comprise a precision of the floating point operands, a number of addends, a number of guard bits used for accumulation, a rounding mode, and a precision of the floating point output;
wherein the rounding mode is one of round to zero or round to nearest even.

7. The method according to one of claims 1 to 6, further comprising synthesizing the circuit operable to perform the floating point arithmetic operation at a desirable output accuracy.

8. A system for designing a circuit to perform a floating point arithmetic operation on one or more floating point operands comprising:
an interface for receiving information identifying a plurality of parameters that characterize circuits for performing the floating point arithmetic operation and an equation relating the plurality of parameters to a maximum relative backward error parameter, the circuits respectively corresponding to combinations of values for the parameters, and for receiving a target maximum relative backward error for the floating point arithmetic operation; and
one or more processors operable to compute a maximum relative backward error for each of one or more of the combinations of values based on the equation,
wherein when the maximum relative backward error for a respective combination of values is less than the target maximum relative backward error, the circuit corresponding to the maximum relative backward error is identified as a circuit for performing the floating point arithmetic operation at a desirable output accuracy.

9. The system according to claim 8, wherein the one or more processors are further operable to synthesize the circuit for performing the floating point arithmetic operation.

10. The system according to claim 8 or 9, wherein the target maximum relative backward error is less than or equal to half of a smallest representation error of the floating point operands.

11. The system according to claim 8 or 9, wherein when the maximum relative backward error for more than one of the combinations of values is less than the target maximum relative backward error, one of the circuits corresponding to the more than one of the combinations of values is selected as a circuit to perform the floating point arithmetic operation.

12. The system according to claim 11, wherein the selected circuit to perform the floating point arithmetic operation is the circuit having the combination of values realizing the most desirable circuit among the circuits corresponding to the more than one of the combinations of values;
wherein, optionally, the selected circuit is selected by synthesizing the circuits for each of the more than one of the combinations of values that is less than the target maximum relative backward error to generate a plurality of synthesized circuits, and selecting the synthesized circuit that has at least one of the smallest size or the lowest power consumption per floating point operation.

13. The system according to one of claims 8 to 12, wherein the floating point arithmetic operation comprises an n-way addition operation to generate a floating point output, where n is an integer greater than or equal to two.

14. The system according to claim 13, wherein the floating point arithmetic operation comprises a dot product computation.

15. The system according to claim 13 or 14, wherein the parameters comprise a precision of the floating point operands, a number of addends, a number of guard bits used for accumulation, a rounding mode, and a precision of the floating point output,
wherein, optionally, the rounding mode is one of round to zero or round to nearest even.
